# EUROPÄISCHE PATENTSCHRIFT

(11) **EP 0 576 733 B1**
(45) Veröffentlichungstag und Bekanntmachung des Hinweises auf die Patenterteilung: **11.03.1998**
(21) Anmeldenummer: 92122000.0
(22) Anmeldetag: 24.12.1992
(51) Int. Cl.: F16L 9/16, B21C 37/06, B21C 37/09

(54) **Verfahren zu Herstellung eines Mehrlagenrohres aus Metall**
Process for producing a multilayered metal pipe
Procédé de fabrication d'un tuyau métallique multicouche

(30) Priorität: 27.06.1992 DE 4221167
(43) Veröffentlichungstag der Anmeldung: 05.01.1994
(73) Patentinhaber: HILLE & MÜLLER, D-40554 Düsseldorf (DE)
(72) Erfinder: Ferenczy, Nikolaus, Dr.-Ing., W-5657 Haan (DE); Junkers, Dieter, Dr.-Ing., W-5657 Haan 2 (DE)
(74) Vertreter: Stenger, Watzke & Ring Patentanwälte

(56) Entgegenhaltungen:
- EP-A- 0 449 600
- EP-A- 0 546 790
- FR-A- 663 273
- FR-A- 2 399 916
- GB-A- 384 154
- GB-A- 671 720
- US-A- 3 948 432

## Beschreibung

Die Erfindung betrifft ein Verfahren zur Herstellung eines Mehrlagenrohres aus Metall, insbesondere für Bremsleitungen von Kraftfahrzeugen, bei dem ein zumindest einseitig mit einer Lotschicht versehenes Stahlband gewickelt und anschließend durch Erhitzen auf eine Temperatur oberhalb der Lotschmelztemperatur zu einem druckdichten Rohr verlötet wird.

Mehrlagenrohre aus Metall, die aus einem flachen Stahlband durch Wickeln oder Rundverformung hergestellt werden, finden insbesondere in der Kraftfahrzeugindustrie und dort speziell als Bremsleitungen für Kraftfahrzeuge Anwendung. Eine weitere Anwendung derartiger Rohrleitungen besteht z.B. bei Rohrleitungen für Kältemaschinen.

In der DE-B 854 608 ist ein aus einem Bandstahl schraubenlinienförmig gewickeltes und verlötetes Mehrlagenrohr bekannt, bei dem als Bindemetall zwischen den aufeinanderliegenden Stahlschichten eine Kupferschicht verwendet wird, die zuvor galvanisch auf das Stahlband aufgetragen ist. Mit dieser seit langem bekannten Technik der Rohrherstellung sind von Anfang an Probleme verbunden gewesen, da derartige Rohre nur eine unzureichende Korrosionsbeständigkeit besitzen. Damit weisen diese Rohre insbesondere im Hinblick auf die Verwendung für Bremsleitungen von Kraftfahrzeugen entscheidende Nachteile auf. Denn gerade Bremsleitungen sind starken korrosiven Einflüssen, wie etwa dem Straßenschmutz, Feuchtigkeit und Salzlösungen ausgesetzt. Außerdem unterliegen Bremsleitungen starken Erschütterungen.

Mehrlagenrohre wurden dann dadurch erheblich verbessert, daß man sie mit Zinkauflagen versehen hat. Ferner wurden im laufe der Jahre auch zusätzlich olivchromatierte und mit flüssigem Kunststoff überzogene Rohre eingeführt.

Insbesondere wurde jedoch auch der Weg beschritten, als Material für die Stahlbänder Edelstähle und insbesondere austenitische Chrom-Nickel-Stähle zu verwenden, wie dies beispielsweise aus der DE 40 10 178 Cl bekannt geworden ist. Die in dieser Patentschrift vorgeschlagene Stahllegierung weist einen Anteil von 2 bis 2,5 % Molybdän und einen Anteil von höchstens 2 % Mangan auf. Als Lötmaterial findet eine Kupferschicht Verwendung, welche nach einem speziellen, Zeit- und Temperaturgrenzen genau einhaltenden Lötverfahren behandelt wird. So wird das Rohr zunächst auf 1000 °C erhitzt und dann in einem weiteren Verfahrensschritt langsam bis zur Schmelztemperatur des Kupferlotes erhitzt. In einer dritten Verfahrensstufe erfolgt die metallurgische Verbindung zwischen dem Kupferlot und dem Stahlband, wobei diese Phase eine Zeitdauer von 20 Sekunden nicht überschreiten darf. Die Einhaltung dieser genau vorgegebenen Verfahrensparameter ist erforderlich, um die bei Lötverfahren gefürchtete Korngrenzendiffusion des Lotwerkstoffes zu vermeiden. Tritt eine derartige Diffusion ein, kann es zum sog. Lötbruch kommen und damit zu Undichtigkeiten der Rohrleitung. Die Einhaltung der kurzen Aufwärmzeiten ist allerdings wegen der guten Wärmeleitfähigkeit der Rohre und der hohen Fertigungsgeschwindigkeiten von 100 bis 200 m/min äußerst schwierig. Die Korngrenzendiffusion des Kupfers führt überdies zu einer erheblichen Minderung der Korrosionsbeständigkeit des Rohres.

Weiterhin ist es aus der FR-A-2 399 916 bekannt, plattierte Stahlbänder zur Herstellung von Mehrlagenrohren zu verwenden. Bei diesen bekannten Mehrlagenrohren sind die Stahlbänder auf der Innenseite mit einer Kupfer-Nickel-Schicht und auf der Außenseite mit einer Kupfer-Zinn-Schicht plattiert. Bei der Herstellung des Mehrlagenrohres kommen diese beiden Schichten durch Überlappungen in Berührung miteinander. Infolge dieser Berührung diffundieren die Schichten bei der Wärmebehandlung weit oberhalb der Schmelztemperatur der Kupfer-Zinn-Schicht unter Ausbildung einer Diffusionsschicht ineinander. Dieser Diffusionsvorgang sowie die Ausbildung der Diffusionsschicht haben zur Folge, daß bei diesem bekannten Lötverfahren eine um bis zu 230° C höhere Temperatur für das Schmelzen der Kupfer-Zinn-Legierung verwendet werden muß, als diese nach dem Zustandsdiagramm für eine Kupfer-Zinn-Legierung mit einem Kupfer-Anteil von 80 % einem ZinnAnteil von 20 % notwendig wäre. Neben der Gefahr der auftretenden Korngrenzendiffusion durch den notwendigen Diffusionsvorgang bewirkt die sich ausbildende Diffusionsschicht auch eine deutliche Heraufsetzung der Löttemperatur. Diese Erhöhung der Löttemperatur auf über 1000° C sowie die Verlängerung der Wärme-Expositionszeit steigern die Gefahr einer interkristallinen Korngrenzendiffusion.

Weiterhin ist aus der US-A-3 948 432 ein Lötverfahren bekannt, bei dem zu Lötzwecken eine aus einer Kupferlegierung bestehende Folie verwendet wird, die zusätzlich noch Mangan-, Eisen-, Aluminium- und Zinn-Anteile enthält. Zwar ist es mit dieser bekannten Vielkomponenten-Kupferlegierung möglich, den Lötvorgang bei einer Temperatur von unterhalb 1000° C durchzuführen, jedoch sind Lötzeiten von etwa 5 Minuten notwendig. Ein Lötverfahren mit so langen Lötzeiten ist jedoch bei modernen, mit mehreren hundert Metern pro Minute laufenden Fertigungen nicht zur rationellen und ökonomischen Fertigung von Mehrlagenrohren verwendbar.

Der Erfindung liegt die **Aufgabe** zugrunde, ein Verfahren zur Herstellung eines Mehrlagenrohres aus Metall, und insbesondere ein Mehrlagenrohr für Bremsleitungen von Kraftfahrzeugen so weiterzuentwickeln, daß Undichtigkeiten und Korrosion soweit als möglich vermieden werden.

Die **Lösung** der Aufgabe ist erfindungsgemäß dadurch gekennzeichnet, daß als Stahlband ein Edelstahlband mit einem Mangan-Anteil von mindestens 2 %, einem Nickel-Anteil von höchstens 10,5 % und einem Chrom-Anteil von 16,5 %, 17 % oder 17,5 % verwendet wird, daß als Lotmaterial eine Kupferlegierung verwendet wird, deren Schmelztemperatur unter 1020° C, vorzugsweise unter 1000° C beträgt, und daß als Legierungskomponente Zinn mit einem Legierungsanteil von 13 % bis 15 %, Zink mit einem Legierungsanteil von 32,5 % bis 37 % oder Silber mit einem Legierungsanteil von 15 % bis 18 % verwendet wird.

Ein unter Verwendung eines solchen Verfahrens hergestelltes Mehrlagenrohr läßt sich bei geringeren Temperaturen verarbeiten als die bekannten Mehrlagenrohre, so daß die gefürchteten Korngrenzendiffusionen des Lotes im Bereich der Oberfläche des Stahlbandes vermieden werden. Auf diese Weise besteht keine Neigung zum Lötbruch und damit zu Undichtigkeiten der Rohrleitung. Ferner wird die Korrosionsbeständigkeit des Werkstoffes erhöht, da mit der Unterbindung interkristalliner Diffusionen des Kupfers in den Stahl auch die Gefahr korrosiver Einflüsse vermindert wird. Zur deutlichen Verringerung interkristalliner Kupferdiffusionen reicht es bereits aus, wenn eine Kupferlegierung verwendet wird, deren Schmelztemperatur unterhalb 1020 °C liegt. Hierbei ist es von zusätzlichem Vorteil, wenn eine Schmelztemperatur von 1000 °C nicht überschritten wird.

Bei einer ersten Variante der Erfindung ist die Cu-Lotschicht mit 13 bis 15 % Zinn legiert. Die Löttemperatur beträgt dann etwa 800° C. Die Kupferlegierung kann jedoch auch mit Zink legiert sein, wobei ein Anteil von 32,5 bis 37 % angestrebt ist entsprechend einer Löttemperatur von etwa 900° C. Ferner ist es möglich, eine Kupferlegierung mit 18 % Silberanteil zu verwenden. Die Löttemperatur liegt dann bei etwa 1000° C.

Infolge der Vermeidung einer interkristallinen Kupferdiffusion verhalten sich die Mehrlagenrohre zwar in den meisten Medien korrosionssicher, jedoch können selbst bei der Verwendung von Edelstahl unter bestimmten Bedingungen Korrosionen eintreten. Mit einer Weiterbildung des Mehrlagenrohres wird daher vorgeschlagen, dieses mit einem zusätzlichen korrosionshindernden Überzug zu versehen.

Gemäß einer bevorzugten Weiterbildung besteht dieser korrosionshindernde Überzug aus einem Kunststoff mit darin dispergierten, chromatierten Aluminiumpigmenten.

Gemäß einer weiteren möglichen Weiterbildung besteht der korrosionshindernde Überzug aus einer Zink-Aluminium-Schicht.

Das Stahlband besteht aus legiertem Edelstahl mit einem Mangan-Anteil von mindestens 2 % und mit einem Nickel-Anteil von höchstens 10,5 % sowie einem Chrom-Anteil von 16,5%, 17% oder 17,5%.

Hierbei ist es von Vorteil, wenn gemäß einer Ausgestaltung des Verfahrens das Stahlband in einem cyanidischen, Zinn- und Kupferionen oder Zink- und Kupferionen enthaltenden Bad galvanisch mit der Kupferlegierung überzogen wird.

Um während des Lötvorganges eine Tropfenbildung des Lotes zu vermeiden, wird schließlich vorgeschlagen, daß die Lötschicht auf der Vorderseite des Stahlbandes mit einer Dicke von 4 bis 6 µm und auf der Rückseite des Stahlbandes mit einer Dicke von 0,5 bis 1,5 µm aufgetragen wird.

Weitere Einzelheiten und Vorteile des Gegenstandes der Erfindung ergeben sich aus der nachfolgenden Beschreibung der zugehörigen Zeichnung. Darin zeigen:
- Fig. 1: eine perspektivische Schnittdarstellung eines Stahlbandes zur Herstellung eines Mehrlagenrohres im Ausgangszustand;
- Fig. 2: in einer teilweise geschnittenen Darstellung ein aus einem Stahlband gewickeltes Mehrlagenrohr und
- Fig. 3: einen Querschnitt durch das Mehrlagenrohr gemäß Fig. 2.

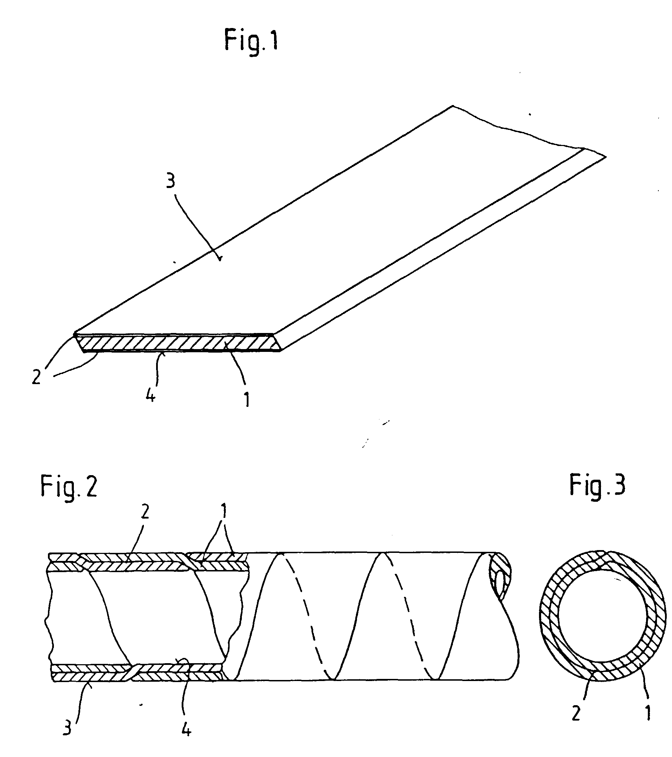

Das in der Zeichnung dargestellte Mehrlagenrohr besteht aus einem in Fig. 1 in ausgerolltem Zustand dargestellten Stahlband 1, das mittels eines Wickelverfahrens in der Weise eingerollt wird, daß sich an jeder Stelle des Mehrlagenrohres eine zweilagige Stahlschicht ergibt, wie dies in den Figuren 2 und 3 dargestellt ist. Das vorbereitete Stahlband 1 gemäß Fig. 1 ist allseitig von einer Lotschicht 2 überzogen, so daß sich in eingerolltem Zustand das Lot der Lotschicht 2 auch zwischen den einzelnen Schichten des Stahlbandes 1 befindet. Durch Aufschmelzen dieses Lotes nach dem Wickelvorgang wird eine druckdichte Abdichtung des Mehrlagenrohres erreicht. Es wird ergänzend darauf hingewiesen, daß die Erfindung auch an nicht gewickelten, sondern rundverformten Mehrlagenrohren anwendbar ist.

Für das Stahlband 1 wird ein niedrig legierter Edelstahl einer später noch anhand von Beispielen erläuterten Zusammensetzung verwendet. Bei der Lotschicht 2 handelt es sich um eine dünne Kupferlegierung mit Anteilen an Zinn, Zink oder Silber und einer Schmelztemperatur von höchstens 1020 °C. Die Dicke der Kupferlegierung auf beiden Seiten des Stahlbandes 1 ist unterschiedlich, wobei die in Fig. 1 dargestellte Oberseite 3 des Stahlbandes 1 mit einer Schichtdicke von 0,5 bis 1,5 µm deutlich dünner ausgebildet ist als die Unterseite 4 mit einer Schichtdicke von 4 bis 6 µm. Bei der Rohrherstellung liegt die die dünnere Lotschicht 2 aufweisende Oberseite 3 außen.

Das dargestellte Mehrlagenrohr findet in erster Linie als Bremsleitung bei Kraftfahrzeugen Verwendung. Weitere Anwendungsgebiete bestehen beispielsweise bei Druckleitungen von Kältemaschinen.

Entscheidend ist, daß die Schmelztemperatur der verwendeten Kupferlegierung unterhalb der Schmelztemperatur reinen Kupfers von 1083 °C liegt. Dies wird durch Beimengung von Legierungsanteilen an Zinn, Zink oder Silber erreicht. Hierbei sollte die bei Herstellung des Mehrlagenrohres verwendete Löttemperatur in der Nähe des eutektischen Punktes oder der eutektischen Linie liegen, um eine größtmögliche Sicherheit für die Lötverbindung zu erreichen und zugleich eine Schädigung des Stahlbandes durch Korngrenzendiffusionen des Kupfers zu vermeiden. Der Auftrag der Kupferlegierung auf das Stahlband vor dem Wickeln erfolgt entweder galvanisch, durch thermisches Spritzen oder durch Vakuumbedampfen. Um eine gute Haftung der Kupferlegierung zu erreichen, wird vor dem Galvanisieren eine elektrolytische Entfettung und Aktivierung entweder in einem Nickelflash-Bad oder in einer speziellen Kupferbeize vorgenommen. Als galvanisches Bad wird ein cyanidisches, Zinn- und Kupferionen oder Zink- und Kupferionen enthaltendes Bad benutzt.

Um das Mehrlagenrohr zusätzlich gegen Korrosion zu schützen, kann in einem letzten Verfahrensschritt das Rohr mit einer Kunststoffbeschichtung versehen werden, die chromatierte Aluminiumpigmente enthält. Alternativ läßt sich das Rohr in einer Nachbehandlung mit einer Schmelze in Form einer Zink-Aluminium-Schicht und zusätzlich mit Kunststoff überziehen.

Nachfolgend werden drei Ausführungsbeispiele angegeben.

### Beispiel 1:

Das Mehrlagenrohr besteht aus einem Edelstahl mit einer Zusammensetzung von
6,5 % Mangan
0,5 % Silicium
16,5 % Chrom
4,5 % Nickel
0,1 % Kohlenstoff.

Die aus diesem Material bestehenden Stahlbänder werden in einer galvanischen Anlage nach entsprechender elektrolytischer Entfettung und Aktivierung entweder in einem Nickelflash-Bad oder in einer speziellen Kupferbeize so vorbehandelt, daß eine abgeschiedene Bronzelegierung anschließend ausgezeichnet haftet. Als Bronzebad wird ein cyanidisches, Zinn- und Kupferionen enthaltendes Bad mit folgender Zusammensetzung benutzt:

| | |
|---|---|
| Cu (als Kaliumkupfercyanid) | 17 - 23 g/l |
| Sn (als Natriumstannat) | 19 - 25 g/l |
| NaCN (frei) | 25 - 32 g/l |
| NaOH | 10 - 14 g/l |
| Temperatur | 55 - 58° C |
| Stromdichte | 3,5 - 6,0 A/dm² |
| Anoden | Bronzeanoden mit ca. 20 % Sn oder getrennte Cu- und Sn-Anoden |

Die Schichtdicke der entstandenen Kupferlegierung wird differenziert aufgetragen, mit einer Schichtdicke von ca. 4pm auf der einen und von ca. 1 µm auf der anderen Seite. Die auf diese Weise abgeschiedene Legierungsschicht wird in dem darauffolgenden Lötverfahren als aufgeschmolzenes Lot für die Herstellung der Mehrlagenrohre verwendet. Die Löttemperatur beträgt ca. 800 - 820° C bei einem Zinnanteil von 13 bis 15 % innerhalb der Kupferlegierung. Das Lötverfahren wird in einer reduzierenden Gasatmosphäre bis zu 100 % Wasserstoffanteil durchgeführt.

Die so verlöteten Rohre werden dann mit einer Kunststoffbeschichtung versehen, die chromatierte Aluminiumpigmente enthält. Schließlich werden die Mehrlagenrohre bei ca. 140 bis 160° C thermisch behandelt, um die Aushärtung bei verbleibender Restelastizität zu erreichen.

### Beispiel 2

Für das Stahlband wird ein Edelstahl mit nachfolgender Zusammensetzung verwendet:
2,1 % Mangan
0,5 % Silicium
17,5 % Chrom
9,0 % Nickel
0,025 % Kohlenstoff.

Die aus diesem Material bestehenden Stahlbänder werden wiederum in einer galvanischen Anlage nach entsprechender elektrolytischer Entfettung und Aktivierung in einem Nickelflash-Bad oder in einer speziellen Kupferbeize so vorbehandelt, daß eine anschließend aufzubringende Abscheidung einer Messinglegierung ausgezeichnet haftet.

Als Messingbad wird ein cyanidisches, Zink- und Kupferionen enthaltendes Bad mit folgender Zusammensetzung benutzt:

| | |
|---|---|
| CuCN | 25 - 30 g/l |
| Zn(CN)₂ | 45 - 55 g/l |
| NaCN (frei) | 58 - 89 g/l |
| (NH₄)₂CO₃ | 7,5 - 10 g/l |
| Temperatur | 50 - 65° C |
| Stromdichte | 4 - 7 A/dm². |

Die Schichtdicke wird ebenso wie bei Beispiel 1 differenziert aufgetragen. Die Löttemperatur beträgt geringfügig über 902° C. Die Kupferlegierung enthält 32,5 - 37 % Zinkanteil. Eine solche Legierung ist galvanotechnisch leicht herstellbar, selbst wenn gewisse Schwankungen bei der galvanischen Abscheidung der Messinglegierung in Betracht gezogen werden. Von Vorteil ist, daß die Tatsache ausgenutzt werden kann, daß in dem Kupfer-Zink-Zustandsdiagramm eine Eutektikale existiert, die bei 902° C liegt, so daß die Kupferlegierung bei dieser Temperatur schmilzt. Je nach Wärmezufuhr während des Lötens ist es erforderlich, daß die Temperatur etwas über dieser Schmelztemperatur liegt. Zur Vermeidung unangenehmer Oxidationserscheinungen wird das Lötverfahren in einer inerten Wasserstoffatmosphäre bis zu 100 % Wasserstoff durchgeführt.

Zur Nachbehandlung werden die in dieser Art behandelten Mehrlagenrohre mit einer Zink-Aluminium-Schicht und zusätzlich mit Kunststoff überzogen.

### Beispiel 3

Verwendet wird ein Edelstahl mit folgender Zusammensetzung:
2,1 % Mangan
0,5 % Silicium
17,0 % Chrom
10,5 % Nickel
2 % Molybdän
höchstens 0,05 % Kohlenstoff.

Diese Stahlbänder werden mit einer Kupfer-Silber-Legierung beschichtet. Wiederum wird die Beschichtung galvanisch nach entsprechender Vorbehandlung aufgetragen. Alternativ läßt sich auch ein Auftrag durch thermisches Spritzen erreichen.

Diese Kupferlegierung enthält ca. 18% Silber und weist eine Schmelztemperatur von ca. 1000° C auf. Die Nachbehandlung dieser Mehrlagenrohre erfolgt entsprechend den Angaben in den Beispielen 1 und 2.

## Patentansprüche

1. Verfahren zur Herstellung eines Mehrlagenrohres aus Metall, insbesondere für Bremsleitungen von Kraftfahrzeugen, bei dem ein zumindest einseitig mit einer Lotschicht versehenes Stahlband gewickelt und anschließend durch Erhitzen auf eine Temperatur oberhalb der Lotschmelztemperatur zu einem druckdichten Rohr verlötet wird,
**dadurch gekennzeichnet,**
daß als Stahlband ein Edelstahlband mit einem Mangan-Anteil von mindestens 2 %, einem Nickel-Anteil von höchstens 10,5 % und einem Chrom-Anteil von 16,5 % , 17 % oder 17,5 % verwendet wird, daß als Lotmaterial eine Kupferlegierung verwendet wird, deren Schmelztemperatur unter 1020° C, vorzugsweise unter 1000°C beträgt, und daß als Legierungskomponente Zinn mit einem Legierungsanteil von 13 % bis 15 %, Zink mit einem Legierungsanteil von 32,5 % bis 37 % oder Silber mit einem Legierungsanteil von 15 % bis 18 % verwendet wird.

2. Vefahren nach Anspruch 1, dadurch gekennzeichnet, daß das Stahlband vor dem Aufbringen der Kupferlegierung zunächst elektrolytisch entfettet und anschließend in einem Nickelflash-Bad oder einer Kupferbeize vorbehandelt wird.

3. Verfahren nach Anspruch 1 oder 2, dadurch gekennzeichnet, daß das Stahlband in einem zyanidischen, Zink- und Kupferionen oder Zinn- und Kupferionen enthaltenden Bad galvanisch mit der Kupferlegierung überzogen wird.

4. Verfahren nach Anspruch 3, dadurch gekennzeichnet, daß die Lotschicht auf der Vorderseite des Stahlbandes in einer Dicke von 4 bis 6 µm und auf der Rückseite des Stahlbandes in einer Dicke von 0,5 bis 1,5 µm aufgetragen wird.

5. Verfahren nach mindestens einem der Ansprüche 1 bis 4, dadurch gekennzeichnet, daß das Mehrlagenrohr zusätzlich mit einem korrosionshindernden Überzug versehen wird.

6. Verfahren nach Anspruch 5, dadurch gekennzeichnet, daß als korrosionshindernder Überzug ein Kunststoff mit darin dispergierten chromatierten Aluminiumpigmenten verwendet wird.

7. Verfahren nach Anspruch 5, dadurch gekennzeichnet, daß als korrosionshindernder Überzug eine Zink-Aluminium-Schicht und Kunststoff verwendet werden.

## Claims

1. Process for producing a multilayer pipe made of metal, in particular for brake lines of motor vehicles, in which a steel strip provided on at least one side with a solder layer is wound and subsequently soldered to form a pressure-tight pipe by heating to a temperature above the solder melting temperature, characterized in that the steel strip used is a stainless steel strip with a proportion of at least 2% manganese, a proportion of at most 10.5% nickel and a proportion of 16.5%, 17% or 17.5% chromium, in that the solder material used is a copper alloy whose melting temperature is below 1020°C, preferably below 1000°C, and in that the alloying component used is tin with a proportion of 13% to 15% in the alloy, zinc with a proportion of 32.5% to 37% in the alloy or silver with a proportion of 15% to 18% in the alloy.

2. Process according to Claim 1, characterized in that, before the application of the copper alloy, the steel strip is firstly electrolytically degreased and then pre-treated in a nickel flash bath or a copper pickle.

3. Process according to one of Claims 1 or 2, characterized in that the steel strip is coated with the copper alloy by electroplating in a cyanide bath containing zinc and copper ions or tin and copper ions.

4. Process according to Claim 3, characterized in that the solder layer is applied to the front side of the steel strip in a thickness of 4 to 6 µm and to the rear side of the steel strip in a thickness of 0.5 to 1.5 µm.

5. Process according to at least one of Claims 1 to 4, characterized in that the multilayer pipe is additionally provided with a corrosion-inhibiting coating.

6. Process according to Claim 5, characterized in that the corrosion-inhibiting coating used is a plastic with chrome-plated aluminium pigments dispersed therein.

7. Process according to Claim 5, characterized in that the corrosion-inhibiting coating used is a zinc/aluminium layer and plastic.

## Revendications

1. Procédé de fabrication d'un tuyau métallique multicouche, notamment pour des conduites de freins de véhicules automobiles, dans lequel on enroule un ruban d'acier muni au moins d'un côté d'une couche à braser et on le brase ensuite en le chauffant à une température supérieure à la température de fusion de brasage afin de former un tuyau résistant à la pression, caractérisé en ce qu'on utilise comme ruban d'acier un ruban d'acier spécial ayant une part de manganèse de 2 % au minimum, une part de nickel de 10,5 % au maximum et une part de chrome de 16,5 %, 17 % ou 17,5 %, on utilise comme matériau à braser un alliage de cuivre dont la température de fusion est inférieure à 1020 °C, de préférence inférieure à 1000 °C, et on utilise comme composants d'alliage de l'étain avec une part dans l'alliage de 13 % à 15 %, du zinc avec une part dans l'alliage de 32,5 % à 37 % ou de l'argent avec une part dans l'alliage de 15 % à 18 %.

2. Procédé selon la revendication 1, caractérisé en ce qu'on dégraisse d'abord le ruban d'acier par électrolyse avant l'application de l'alliage de cuivre et en ce qu'on effectue ensuite un traitement préalable dans un bain flash de nickel ou dans un décapant au cuivre.

3. Procédé selon la revendication 1 ou 2, caractérisé en ce qu'on recouvre le ruban d'acier de l'alliage de cuivre par galvanisation dans un bain au cyanure contenant des ions de zinc et de cuivre ou des ions d'étain et de cuivre.

4. Procédé selon la revendication 3, caractérisé en ce qu'on applique la couche à braser sur le dessus du ruban d'acier sur une épaisseur de 4 à 6 µm et sur le dessous du ruban d'acier sur une épaisseur de 0,5 à 1,5 µm.

5. Procédé selon au moins l'une des revendications 1 à 4, caractérisé en ce qu'on munit de plus le tuyau multicouche d'un revêtement anticorrosion.

6. Procédé selon la revendication 5, caractérisé en ce qu'on utilise comme revêtement anticorrosion une matière plastique avec des pigments d'aluminium chromés dispersés à l'intérieur.

7. Procédé selon la revendication 5, caractérisé en ce qu'on utilise comme revêtement anticorrosion une couche zinc-aluminium et une matière plastique.
